# EUROPEAN PATENT APPLICATION

(11) **EP 2 234 009 A2**
(43) Date of publication of application: **29.09.2010**
(21) Application number: 10156851.7
(22) Date of filing: 18.03.2010
(51) Int. Cl.: G06F 3/048

(54) **Mixer device, method for controlling windows of mixer device, and program for controlling windows of mixer device**

(30) Priority: 26.03.2009 JP 2009077351
(71) Applicant: YAMAHA CORPORATION, Naka-ku Hamamatsu-shi Shizuoka 430-8650 (JP)
(72) Inventor: Fujita, Hiroaki, Hamamatsu-shi Shizuoka 430-8650 (JP); Terada, Kotaro, Hamamatsu-shi Shizuoka 430-8650 (JP)
(74) Representative: Kehl, Günther

(57) **Abstract**

A method is designed for controlling windows of a mixer device including a processing unit, an operating panel, and a touch panel provided on the operating panel, the touch panel functioning as both a display part for displaying windows and an input part for inputting instructions. The method is performed by the processing unit as follows. First, a determining step determines whether or not any window has already been displayed on the touch panel when an instruction to display a new window is made. Then, a first displaying step displays the new window when no window has already been displayed, and otherwise displays, when a window has already been displayed, the new window at foreground while displaying at least a title bar of a window that has already been displayed. Further, a second displaying step displays a close button only on a foreground window among windows displayed on the touch panel and deactivates display of a close button for each window behind the foreground window.

## Description

### BACKGROUND OF THE INVENTION

### [Technical Field of the Invention]

The present invention relates to a technology for controlling a plurality of windows displayed on an audio mixer or the like and particularly to a technology for allowing a user to easily perform an operation for switching between a plurality of windows and an operation for closing a window while preventing erroneous operations when the user operates a plurality of windows (for example, popup frames) displayed on a touch panel.

### [Description of the Related Art]

A conventional audio mixer or the like including a touch panel allows the user to touch a screen of the touch panel with a finger or the like to perform a variety of operations on a plurality of windows displayed on the screen. When the user desires to switch between windows displayed on the screen, the user can allow a switching target window present at the rear side on the screen to be brought into the foreground by touching any area, which is exposed without being hidden by other windows, on the switching target window.
A known device provides functionality to allow the user to close a window by touching a close button on the window and also to allow the user to close all displayed windows by touching a marginal portion on the screen where no window is displayed (see a "popup window" section in p.28 in Digital Mixing Console M7CL Manual, Yamaha, 2005). Overlapping of a plurality of windows are managed by a layer structure in which layers are stacked in a vertical direction on the screen.

In the following description, the screen side of the touch panel (i.e., the side thereof facing the user who views the screen) is referred to as "front side" and the opposite side is referred to as "rear side".

However, there are operation-related problems when the user operates windows through a user interface on a touch panel. For example, when a plurality of windows are displayed on the touch panel, a window that has been displayed at the foreground until then is partially hidden behind the windows, or the screen of the touch panel is full of the windows such that the user may overlook a window that they desire to operate. In association with the touch panel, there is also a problem in that, when a plurality of windows are present on the screen, it is not only difficult for the user to operate the windows but it is also likely to perform erroneous operations since the user should always touch a specific location in a specific area to perform an operation.

### SUMMARY OF THE INVENTION

Therefore, it is an object of the invention to provide a technology for preventing erroneous operations while allowing easy operations by employing a method or the like for efficiently arranging a plurality of windows when a user operates windows through a user interface on a touch panel of an audio mixer or the like.

The invention that has been made to achieve the above object is characterized by a method for controlling windows of a mixer device including a processing unit, an operating panel, and a touch panel provided on the operating panel, the touch panel functioning as both a display part for displaying windows and an input part for inputting instructions, the method being performed by the processing unit and comprising: a determining step of determining whether or not any window has already been displayed on the touch panel when an instruction to display a new window is made; a first displaying step of displaying the new window when no window has already been displayed, and otherwise displaying, when a window has already been displayed, the new window at foreground while displaying at least a title bar of a window that has already been displayed; and a second displaying step of displaying a close button only on a foreground window among windows displayed on the touch panel and deactivating display of a close button for each window behind the foreground window.

The inventive method further comprises: a detecting step of detecting that a user has touched a window other than a foreground window at an exposed portion of the window viewed on a screen of the touch panel, in case that a plurality of windows have been displayed on the touch panel; and a switching step of switching between a display position of the window touched by the user and the foreground window, thereby displaying the window touched by the user at foreground.

In addition, the inventive method further comprises: a detecting step of detecting that a user has touched the close button displayed only at the foreground window or a user has touched a marginal area on the touch panel where no window is displayed; and a closing step of closing the foreground window when touching of the close button or touching of the marginal area has been detected.

The invention is also characterized by a mixer device including an operating panel, a touch panel provided on the operating panel to function as both a display part and an input part, and a plurality of controls arranged on the operating panel near the touch panel, the mixer device comprising: a storage part that stores a window manager table that registers display sequence data indicating layers for managing an overlapping manner of windows displayed on the touch panel and display position data for managing a display position of each window displayed on the touch panel; a rearrangement part that determines, when an instruction to display a new window containing image elements placed in an arrangement corresponding to an arrangement of the plurality of controls has been made, whether or not a window containing image elements placed in an arrangement corresponding to the arrangement of the plurality of controls has already been displayed on the touch panel, wherein (1) when no window has already been displayed, the rearrangement part calculates display position data that allows the new window to be arranged near a side of the touch panel to which the plurality of controls are arranged and that allows a title bar of the new window to be arranged opposite the side of the touch panel and registers the calculated display position data and display sequence data indicating a foreground layer as an entry of the new window in the window manager table, and (2) when at least one window containing the image elements has already been displayed, (2-1) the rearrangement part calculates display position data that allows the new window to be arranged near a side of the touch panel to which the plurality of controls are arranged and that allows a title bar of the new window to be arranged opposite the side of the touch panel and registers the calculated display position data and display sequence data indicating a foreground layer as an entry of the new window in the window manager table, and (2-2) the rearrangement part calculates, for an entry in the window manager table corresponding to the at least one window that has already been displayed, display position data that allows the already displayed window to be arranged such that only a title bar of the already displayed window is displayed to a side of a title bar of the new window, the side thereof being opposite to the side of the touch panel to which the plurality of controls are arranged, overwrites display position data of the entry of the already displayed window with the calculated display position data, and overwrites display sequence data of the entry with display sequence data allowing the already displayed window to be located in a layer that is immediately behind a layer in which the already displayed window has been located; a display control part that displays each window on the touch panel using the display position data and display sequence data that are registered in the window manager table by the rearrangement part; and a close button control part that displays a close button only on a foreground window among displayed windows and deactivates display of a close button for each window behind the foreground window.

The mixer device further comprises: a detection part for detecting that a user has touched a window other than a foreground window at an exposed portion of the window viewed on a screen of the touch panel incase that a plurality of windows have been displayed on the touch panel; and a switching part that switches between display position data and display sequence data of the window touched by the user and display position data and display sequence data of the foreground window, thereby displaying the window touched by the user at the foreground.

In addition, the mixer device further comprises: a detecting part for detecting that a user has touched the close button displayed only at the foreground window or user has touched a marginal area on the touch panel where no window is displayed; and a closing part that closes the foreground window when touching of the close button or touching of the marginal area has been detected.

In the mixer device, the controls are arranged near to an up side, down side, right side or left side of the touch panel.

The invention is also characterized by a machine readable medium containing a window control program for use in a mixer device including an operating panel, a touch panel provided on the operating panel to function as both a display part and an input part, and a plurality of controls provided on the operating panel near the touch panel, the window control program being executable by the mixer device to perform a specific windowing method for controlling windows of the mixer device described above.

The invention provides a method or the like for efficiently arranging a plurality of windows when a user operates windows using a user interface on a touch panel of an audio mixer or the like such that a foreground window alone draws attention of the user and at least title bar of each rear window is viewed. This method allows the user to easily view and operate the windows while preventing erroneous operations. The method also allows the user to perform an operation for switching between a rear window and a foreground window and an operation for closing a foreground window while reducing erroneous operations.

### BRIEF DESCRIPTION OF THE DRAWINGS

FIG. 1 illustrates a hardware configuration of a digital mixer of a first embodiment.
FIGS. 2(a) to 2(d) illustrate examples of display of windows.
FIGS. 3(a) and 3(b) illustrate an example of manner by which a window is closed.
FIG. 4 illustrates a positional relationship between a touch panel and controls.
FIGS. 5(a) to 5(e) illustrate examples of display of windows according to a second embodiment.
FIG. 6 illustrates a method for displaying windows when a screen is full of windows.
FIG. 7 illustrates example display of windows corresponding to controls arranged to the left side.
FIG. 8 illustrates a window manager table.
FIGS. 9(a) to 9(c) are flow charts illustrating procedures.
FIGS. 10(a) to 10(d) illustrate first examples of display of windows of related art.
FIGS. 11(a) and 11(b) illustrate second examples of display of windows of related art.

### DETAILED DESCRIPTION OF THE INVENTION

Embodiments for carrying out the invention will now be described with reference to the accompanying drawings.

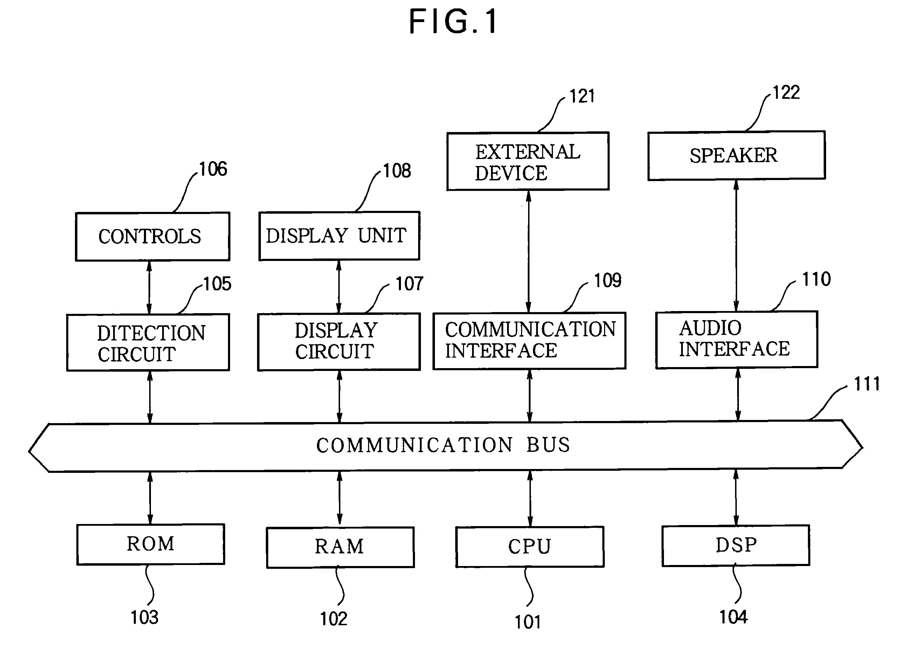

FIG. 1 is a block diagram illustrating a hardware configuration of a digital mixer which is a first embodiment according to the invention. A CPU 101 is a processing device for controlling the overall operation of the mixer. A random access memory (RAM) 102 is a volatile memory used as a work region or a load region of a program executed by the CPU 101. A read only memory (ROM) 103 is a nonvolatile memory that stores a variety of programs that are executed by the CPU 101, data, or the like. Controls 106 include a variety of switches, buttons and faders that are operated by the user and are mounted on an operating panel. A detection circuit 105 detects an operation performed on the controls 106 and outputs the operation information to the CPU 101. A display unit 108 is a display mounted on the operation panel to display a variety of information and includes a touch panel that can input a position at which a finger or the like touches the touch panel. A display circuit 107 performs a process for displaying display information output from the CPU 101 on the display unit 108 and outputting touch operation information of the display unit 108 to the CPU 101.

An external device 121 is, for example, an analog to digital (AD) converter that converts an audio signal received from a microphone or the like into a digital signal and inputs the digital signal to the digital mixer, a digital to analog (DA) converter that converts a digital audio signal into an analog signal and outputs the analog signal to the outside, or a digital signal input/output device that performs input/output of digital audio data. A communication interface (I/F) 109 is an interface circuit that transmits or receives signals to and from the external device 121. An audio interface (I/F) 110 converts a digital audio signal output from the DSP 104 into an analog signal and outputs the analog signal to a speaker 122. A digital signal processor (DSP) 104 is a processing device that performs, for example, a mixing process, an audio effect process, an audio volume control process, or the like on a waveform signal input from the external device 121 through the communication interface 109 by executing a variety of microprograms based on instructions from the CPU 101 and outputs the resulting waveform signal to the speaker 122 through the audio interface 110 or outputs the same to the external device 121 through the communication interface 109.

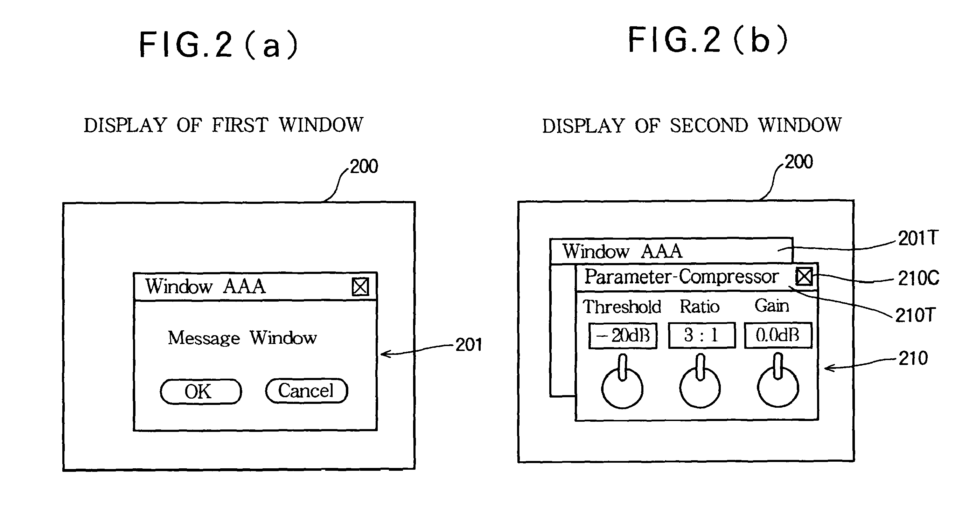

FIGS. 2(a) to 2(d) illustrate examples of display of windows on the digital mixer of FIG. 1. In the following description, T attached to a reference number denoting a window indicates a title bar of the window and R attached to the reference number indicates a contents display region located below the title bar of window, and C attached to the number indicates a close button of the window. Specifically, FIG. 2 (a) illustrates a state of a screen 200 of a touch panel (corresponding to the display unit 108 of FIG. 1) in which a first window 201 is displayed thereon. FIG. 2(b) illustrates a state of the screen 200 in which a second window 210 is displayed in the state of FIG. 2(a). Here, the "window" is a technical term indicating a specific kind of graphical user interface (GUI). The GUI is a type of user interface which allows people to interact with a computer through a metaphor of direct manipulation of graphical images and widgets in addition to text. The window is a graphical image having a rectangular area on a computer terminal or screen containing some kind of user interface, displaying the output of and allowing input for one of a number of simultaneously running computer processes.
Each window may be displayed for any reason or purpose. For example, the first window 201 may be displayed by operating a control on an external panel and the second window 210 may then be displayed by operating a different control. The position of display of the first window 201 is automatically adjusted as the second window 210 is displayed. Specifically, the position of the window 201 is slightly moved to the upper left side from the position of FIG. 2(a) such that at least title bars 201T and 210T of the windows are viewed without overlapping and the windows are all located at about the center of the screen 200. In addition, as a characteristic feature of this embodiment, when a plurality of windows are displayed, a close button of a foreground window (the close button 210C of the foreground window 210 in the example of FIG. 2(a)) is displayed alone, while all close buttons of the other windows are not displayed. The same is applied when subsequent windows, i.e., a third window, a fourth window, and so on, are displayed in an overlapping manner. That is, when a new window is displayed, the new window is displayed at the foreground and at least title bars of windows located at the rear side (i.e., located behind the new window) are displayed without overlapping. A close button is displayed only on the new window at the foreground, while all close buttons of the other windows are not displayed.

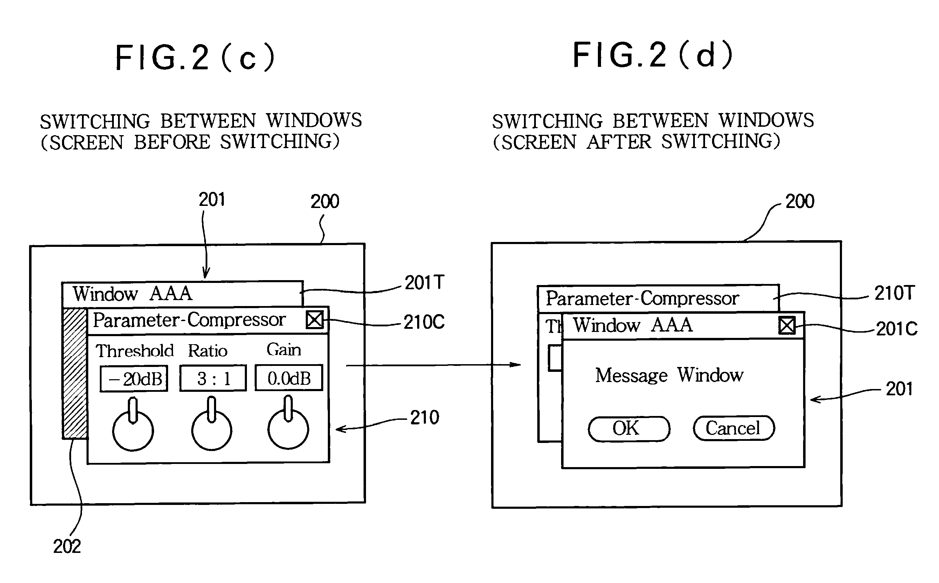

The window 210 at the foreground can be switched from the state of FIG. 2(c) to that of FIG. 2(d) by touching the title bar 201T of the window 201 which is not at the foreground or a shaded portion (exposed portion) 202 of the window 201 which is viewed on the screen. Here, although the portion 202 of the window 201 is shaded, a variety of image elements are actually displayed on the exposed portion 202. In summary, this window switching is a process for switching between the display position of the window 210 at the foreground in FIG. 2(c) and the display position of the window 201, which is a target window for switching with the window 210, through the touch operation and displaying the window 201 which has been at the rear side in FIG. 2(b) at the foreground as shown in FIG. 2(d). If the sizes of frames of the windows 201 and 210 are equal, only display content of the windows may be switched without changing the display of the frames. When the sizes of frames of the windows 201 and 210 are different, the sizes of the frames of the windows 201 and 210 may be adjusted with reference to the upper left positions of the windows. This window switching reactivates the close button 201C of the window 201 at the foreground and deactivates the close button 210C of the window 210 which is hidden at the rear side.

Although window switching when two windows overlap has been described with reference to FIGS. 2(c) and 2(d), the same is applied when three or more windows overlap. When the first and third windows, numbered foreground first, are switched, the second window is not changed.

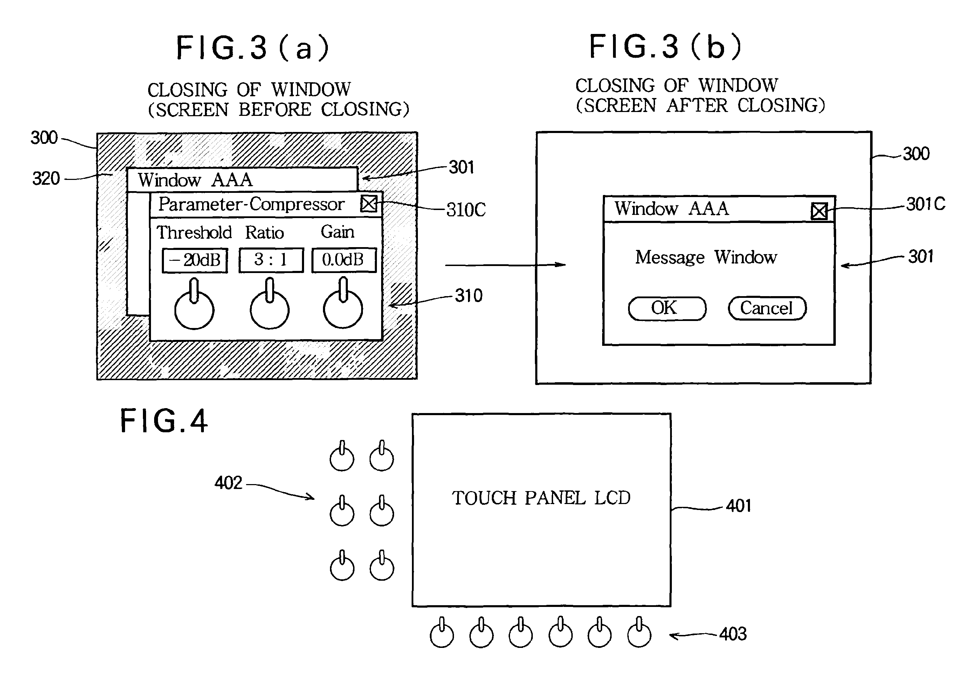

FIGS. 3(a) and 3(b) illustrate a manner by which a window is closed. A close button is displayed only on a window at the foreground when a plurality of windows are displayed as described above in FIGS. 2(a) to 2(d). Accordingly, for example, a close button 310C is displayed only on a window 310 at the foreground when two windows 301 and 310 are displayed as shown in FIG. 3(a). By touching the close button 310C, the foreground window is closed and the window 301 is redisplayed as a new foreground window as shown in FIG. 3(b). A close button 301C is reactivated and displayed on the window 301. In the state of FIG. 3(a), the foreground window 310 may also be closed by touching a shaded marginal area 320 on the screen in which no window is displayed instead of touching the close button 310C of the window 310. Here, although the marginal area 320 is shaded, a variety of image elements are actually displayed on the marginal area 320. The same is applied when three or more windows overlap, and the foreground window may be closed by touching a close button of the foreground window or a marginal area where no window is displayed.

According to the first embodiment described above with reference to FIGS. 1 to 3, it is possible to easily switch between a window at the background and a window at the foreground by touching a title bar of the rear window or an exposed portion thereof which is viewed on the screen. In addition, since a close button is displayed only on the foreground window and the foreground window is closed by touching a marginal area in which no window is displayed, it is possible to prevent erroneous closing operations and also to easily conduct closing operations.

Next, a description is given of a second embodiment. A digital mixer of the second embodiment has the same hardware configuration as that of FIG. 1. In the second embodiment, controls are mounted on an operation panel adjacent to a touch panel and a window associated with the controls is displayed.

FIG. 4 illustrates a positional relationship between the touch panel (corresponding to the display unit 108 of FIG. 1) and the controls (corresponding to the controls 106 of FIG. 1) of the digital mixer of the second embodiment. A plurality of controls are arranged around a screen 401. In this example, six controls 402 are arranged to the left side of the screen 401 and six controls 403 are arranged below the screen 401. In the case where these controls 402 and 403 are mounted, a window associated with the controls may be displayed. When such windows overlap, display is complicated and operation is difficult.

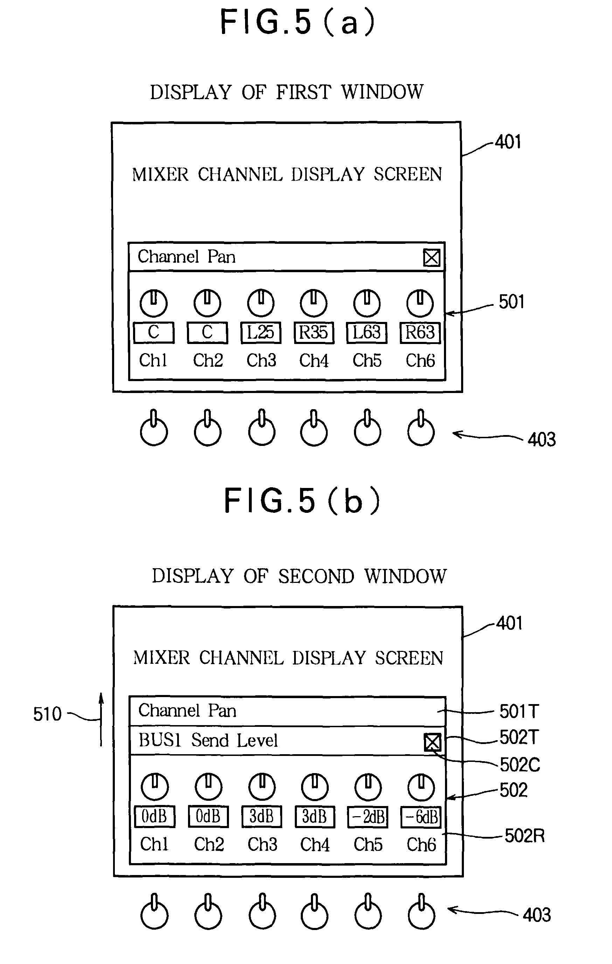

FIGS. 5(a) to 5(e) illustrate an example in which a variety of parameters are changed on a plurality of windows using the controls 403 arranged at the lower side of the screen 401 in the second embodiment. FIG. 5(a) illustrates a state in which a first window 501 is displayed on the screen 401. Respective image elements of the six controls 403 are displayed on the window 501 in an arrangement corresponding to the arrangement of the six controls 403 such that the types, current value, or the like of parameters that can be changed using the controls 403 can be seen from the image elements. When one of the controls 403 is operated, a corresponding parameter is changed according to the operation changed and a image element of the parameter corresponding to the control in a contents display region 501R is also changed.

FIG. 5(b) illustrates a state in which a second window 502 is displayed at the foreground in the state of FIG. 5(a). Only a title bar 501T of the first window 501 is displayed and the second window 502 is displayed as a foreground window below the title bar 501T. Here, an arrow 510 indicates that the title bar 501T of the window 501 has slightly moved up from its position in FIG. 5(a). The window 502 includes a title bar 502T and a contents display region 502R. From the display of the contents display region 502R, it can be seen that the types, current values, or the like of parameters corresponding respectively to the six controls 403 have been switched to those shown in the new window 502. A close button 502C is displayed only on the window 502 at the foreground and no close button is displayed on the window 501 at the rear side.

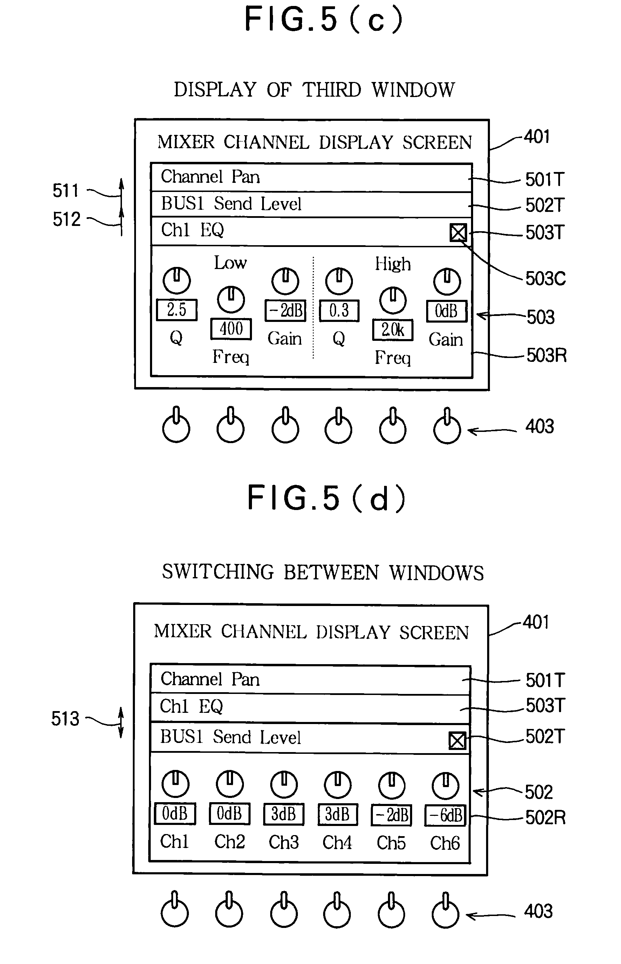

FIG. 5(c) illustrates a state in which a third window 503 is displayed at the foreground in the state of FIG. 5(b). Only title bars 501T and 502T of the first and second windows 501 and 502 are displayed. Arrows 511 and 512 indicate that the title bars 501T and 502T have slightly moved up from their positions in FIG. 5(b). A title bar 503T and a contents display region 503R of the third window 503 are displayed at the foreground and a close button 503C is displayed on the title bar 503T. In this state, parameters displayed in the contents display region 503R of the new 503 can be changed by operating the controls 403. Additional windows may be displayed in the same manner as described above. In the case where a new window is displayed, only title bars of windows that have been previously displayed are displayed at positions that have automatically moved up and the new window is displayed at the foreground. A close button is displayed only on the foreground window. When the foreground window is closed, the display state returns to the same state as before the window is displayed. For example, when the foreground window 503 is closed in the state of FIG. 5(c), the window 502 of the title bar 502T that has been at the rear side becomes a foreground window which fills a lower portion of the screen 401 and the title bar 501T moves down accordingly as shown in FIG. 5(b).

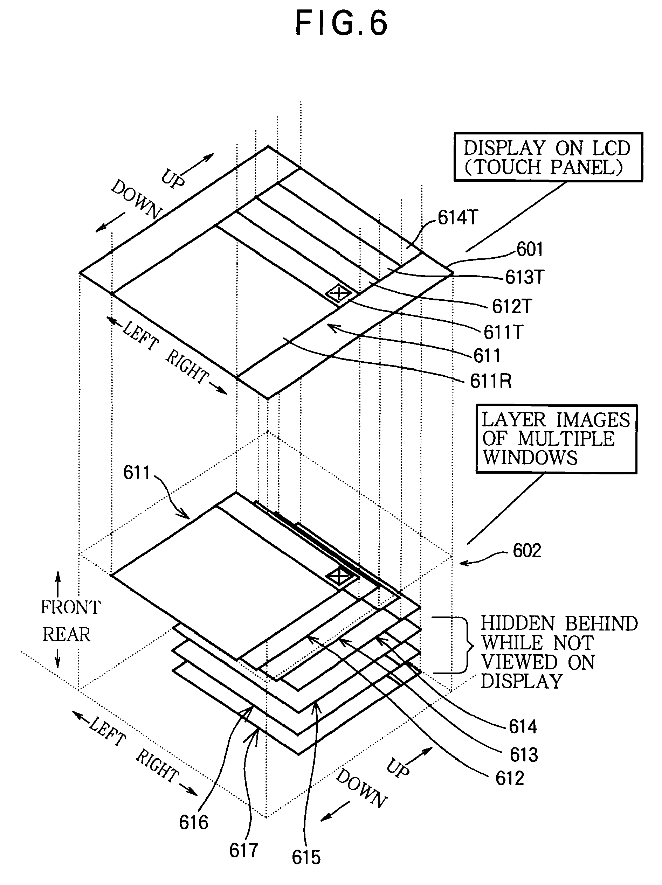

FIG. 6 illustrates a windowing method in the case where new windows are additionally displayed after a screen has become full of windows as windows have been sequentially displayed as described above. The new windows can be sequentially displayed in an overlapping manner as described above. However, since the vertical length of the screen is limited, even the title bar of a rear window cannot be displayed when the number of displayed windows has exceeded a specific number. In this case, the title bar of the rear window is not displayed and the rear window is inserted behind the displayed windows. In the example of FIG. 6, four title bars including a title bar of the foreground window are displayed on the screen of the touch panel, thereby completely filling the screen. Reference numeral "601" denotes the screen of the touch panel. A title bar 611T and a contents display region 611R of the foreground window 611 are displayed on the screen 601 and title bars 612T, 613T, and 614T of three windows that are located at the rear side of (i.e., behind) the foreground window 611 are also displayed on the screen 601.

Reference numeral "602" denotes respective layer images of windows that are displayed on the screen 601 as shown. Overlapping of windows is managed by arranging the windows on respective layers of a hierarchical structure. Although windows 611 to 614 of four layers when counted from the foreground are actually displayed on the screen, windows 615 to 617, which are hidden in layers behind the window 614, are also present. For example, if a new window is displayed at the foreground in this state, the entirety of the window 614 which has been viewed only at the title bar 614T until then is hidden behind the window 613 since the positions of the windows 611 to 613 move to the upper side of the screen by the title bar height due to display of the new window at the foreground. Of course, since display data of the hidden windows is present, the hidden windows can be redisplayed on the screen by closing windows at the foreground one by one.

If the vertical lengths (i.e., heights) of the displayed windows are all equal (and the heights of the title bars thereof are all equal), the maximum number of title bars that can be displayed on the screen is always the same. However, if the heights of the displayed windows are different, the maximum number of title bars that can be displayed on the screen is not always the same. When the heights of the windows are different, the first window is arranged at the foreground on the screen 601 with the bottom edge of the first window matching the bottom edge of the screen 601. Subsequently, the second window is arranged as a first rear window at the rear side of the first window such that only a title bar of the second window is displayed above a title bar of the first window. Similarly, the third window is arranged as a second rear window at the rear side of the second window such that only a title bar of the third window is stacked and displayed above a title bar of the second window. In this manner, title bars of rear windows are sequentially stacked and displayed. Once a displayed title bar of a rear window reaches the top edge of the screen as the process for stacking the title bars is repeated, further rear windows are sequentially piled in rear layers such that even title bars thereof are not displayed with the top edge of each of the rear windows matching the top edge of the screen 601. Since windows are rearranged in this manner, the maximum number of title bars that can be displayed on the screen varies depending on the height of the foreground window. In this embodiment, the maximum number of title bars displayed on the screen is not necessarily constant since windows are always rearranged as described above when a new window is displayed, windows are switched, or a window is closed.

FIG. 5(d) illustrates a state in which windows have been switched by touching the title bar 502T in the state of FIG. 5(c) in order to display the window 502 at the foreground. As shown by an arrow 513, windows 502 and 503 are switched such that the window 502 of the title bar 502T of FIG. 5(c) is displayed at the foreground as shown in FIG. 5(d), and the window 503 that has been located at the foreground in the state of FIG. 5(c) is arranged at the rear side with only the title bar 503T thereof being displayed as shown in FIG. 5(d). Similarly, a window other than the foreground window displayed on the screen can be switched with the foreground window by touching a title bar of the window other than the foreground window. When windows have been switched, a close button is displayed only on a window at the foreground. In the case of switching of windows from the state of FIG. 5(c) to the state of FIG. 5(d), the height of the title bar 501T of the rearmost window in FIG. 5(d) from the bottom of the screen is shorter than the height of the title bar 501T of the rearmost window in FIG. 5(c) from the bottom of the screen when the windows have been rearranged as described above since the height (vertical length) of the window 502 at the foreground in FIG. 5(d) is shorter than that of the window 503 at the foreground in FIG. 5(c).

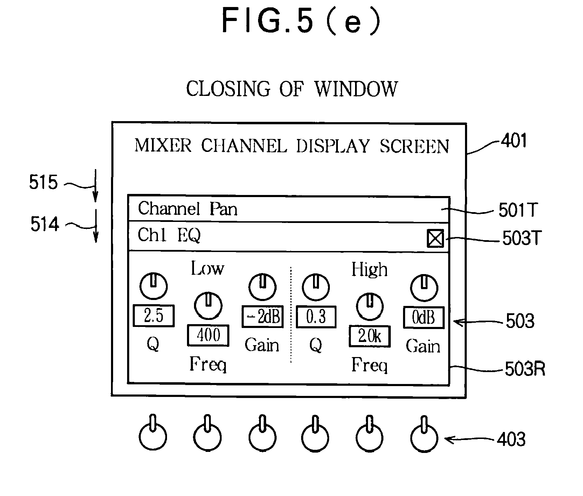

FIG. 5(e) illustrates a state of the screen obtained by closing the foreground window in the state of FIG. 5(d). Similar to the first embodiment, the closing operation may be performed by touching a close button displayed only on the foreground window or a marginal area on the screen in which no window is displayed. By performing the closing operation on the screen of FIG. 5(d), the foreground window 502 is closed and the window 503 of the title bar 503T that has been at the rear side is displayed at the foreground. The close button is displayed only on the foreground window 503. Arrows 514 and 515 show that the windows 501 and 503 that were at the rear side are displayed on the screen after moving down through the rearrangement.

According to the second embodiment described above, when a plurality of windows each corresponding to the plurality of controls 403 mounted below the screen 401 of FIG. 4 is displayed, it is easy to view and operate the foreground window since the foreground window is always displayed near the controls 403 located below the screen. In addition, it is easy to view the title bars of windows at the rear side since the title bars of the rear windows are arranged in an orderly fashion above the title bar of the foreground window and it is also easy to identify which windows are open and therefore it is also easy to perform an operation for switching between the windows. It is also easy to perform an operation for closing the foreground window since the close button is displayed only on the foreground window and the foreground window can also be closed by touching a marginal portion in which no window is displayed.

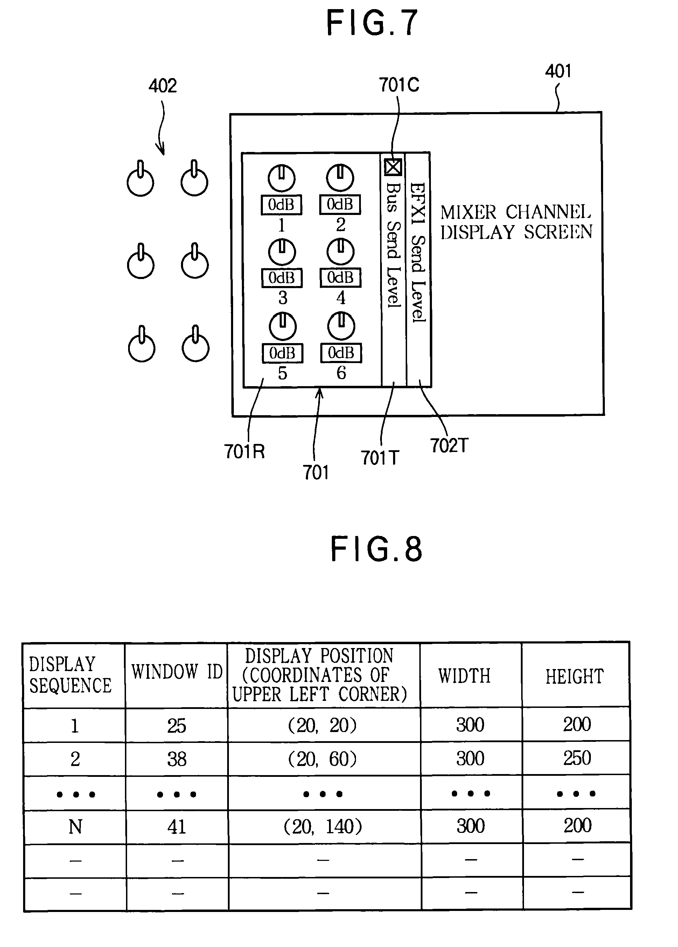

FIG. 7 illustrates a modification of the second embodiment. The second embodiment has been described above with reference to an example in which windows corresponding to the controls 403 mounted below the screen 401 are displayed. On the other hand, the modification of FIG. 7 is an example in which windows corresponding to controls 402 mounted to the left side of a screen 401 are displayed. Since the controls 402 are arranged to the left side of the screen 401, a new window 701 is displayed at the foreground on the left side of the screen 401. That is, the window 701 is displayed such that the left edge of the window 701 matches the left edge of the screen 401 when viewed from the user. A title bar 701T is displayed vertically on the opposite side (i.e., on the right edge) of the window 701. Respective image elements are displayed in an arrangement corresponding to the arrangement of the six controls 402 in a contents display region 701R. A rear window is displayed only at a title bar thereof as indicated by 702T. When a new window is displayed at the foreground, the title bar of each rear window is displayed after being slightly shifted to the right on the screen. When the horizontal lengths of windows are different, the windows are rearranged as described above with reference to FIG. 6 such that the windows shift to the right side with reference to the left edge of the screen. Similar to the above embodiments, a close button is displayed only on the foreground window. The same operations as those of the second embodiment described above with reference to FIGS. 5(a) to 5(e) can be applied to the modification of FIG. 7 with the only difference being that title bars are arranged one by one toward the right side of the screen. Displays of FIGS. 5 and 7 may also be present together.

The following is a description of a manager table that is used in the second embodiment described above with reference to FIGS. 5(a) to 5(e). FIG. 8 illustrates exemplary contents of the manager table. The manager table is a data table that is loaded into a RAM 102 when the system starts and is used to manage display positions or the like of windows that are displayed on the screen. In the manager table, "display sequence" indicates a number representing the overlapping order of each window in the layer structure described in FIG. 6. Specifically, an entry having a "display sequence" number of 1 indicates a window in the rearmost layer. The "display sequence" number increases by 1 each layer toward the foreground. Of entries of the manager table, an entry having the largest "display sequence" number of N indicates a window in the foreground layer. It is possible to achieve display of windows as described above with reference to FIGS. 5(a) to 5(e) by sequentially displaying each window in increasing order of the "display sequence" number, starting from "1", such that a window on the front side is written over a window in the rear side. "Window ID" indicates an ID for uniquely specifying each window. A title displayed on the title bar, image elements displayed in the contents display region, and the like are determined according to the window ID. "Display position" indicates the coordinates of the upper left corner of each window. "Width" and "Height" indicate the width size and height size of each displayed window. When a new window is displayed, one entry corresponding to the window is registered in the manager table. Each entry having a "display sequence" number of "-" is empty.

The following is a description of procedures according to the second embodiment described above with reference to FIGS. 5(a) to 5(e).

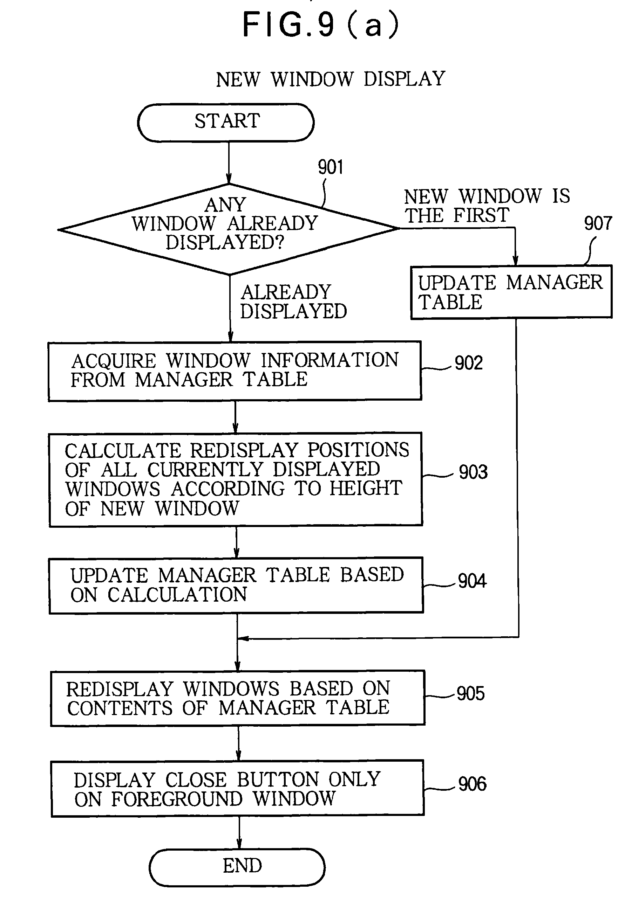

FIG. 9(a) illustrates a procedure performed by the CPU 101 when an instruction to display a new window has been made. At step 901, with reference to the manager table, it is determined whether or not any window has already been displayed. When no window has been displayed, i.e., when the new window for display is the first, an entry corresponding to the new window is written as an entry having a "display sequence" number of "1" to the manager table at step 907. "Display position" is set to a position value of the window when the window is arranged on the lower side of the screen such that the bottom edge of the window matches the bottom edge of the screen as shown in FIG. 5(a). Then, the window is displayed based on the contents of the manager table at step 905. A close button is displayed on the foreground window at step 906 and the procedure is then terminated.

When it is determined that a window(s) has already been displayed (i.e., a window(s) is currently being displayed), currently displayed window information is acquired from the manager table at step 902 and redisplay positions of all windows that are being currently displayed are calculated according to the height of the new window for display at step 903. This is a process for arranging the new window for display at the foreground and arranging the previously displayed windows such that only title bars thereof are displayed above the new window and then calculating display positions of all windows. At step 904, the manager table is updated based on the calculation. Accordingly, entries of all windows including the new window are set in the manager table. At step 905, all windows are displayed in the order of "display sequence" numbers based on the contents of the manager table. Then, at step 906, a close button is displayed only on the window at the foreground and display of a close button of the window behind the foreground window is deactivated and the procedure is then terminated.

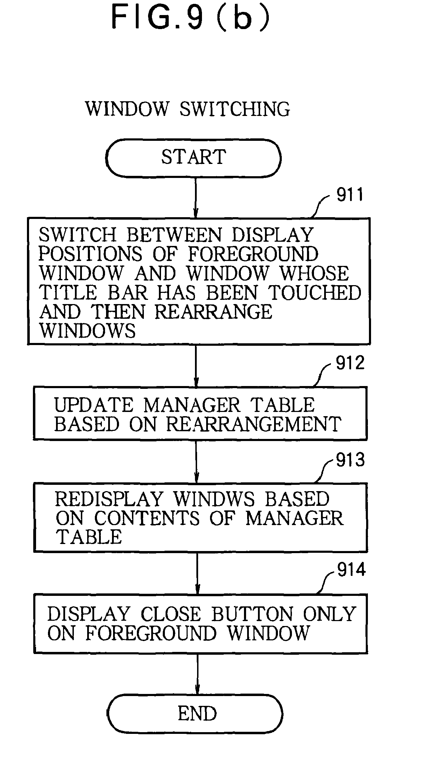

FIG. 9(b) illustrates a procedure performed by the CPU 101 when an operation for switching between windows on the screen has been performed as described above with reference to FIG. 5(d). At step 911, respective "display sequence" values of a window, which is currently at the foreground, and a switching target window, whose title bar has been touched, stored in the manager table are switched with each other and all windows are rearranged as described above with reference to FIG. 6. Since display positions of all windows after the windows are switched are calculated via the rearrangement, the manager table is updated based on the calculation at step 912. Then, at step 913, all windows are displayed in the order of "display sequence" numbers based on the contents of the manager table. Then, at step 914, a close button is displayed only on the window at the foreground and display of a close button of the window behind the foreground window is deactivated and the procedure is then terminated.

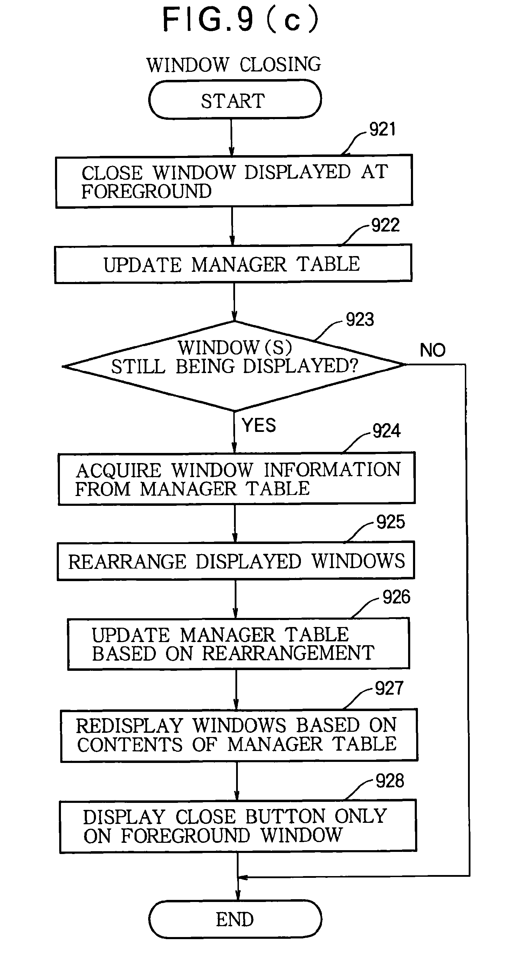

FIG. 9(c) illustrates a procedure performed by the CPU 101 when an instruction to close a window has been issued as described above with reference to FIG. 5(e). A window that is being currently displayed on the foreground is closed at step 921 and the manager table is updated at step 922. This is a process for deleting the contents of an entry having the largest "display sequence" value N in the manager table so that the entry is empty. Then, at step 923, it is determined whether or not a window(s) is still being displayed. If no window is being displayed, the procedure is terminated. If one or more windows are still being displayed, information of the windows is acquired from the manager table at step 924 and the windows are rearranged as described above with reference to FIG. 6. At step 926, the manager table is updated based on the rearrangement. At step 927, all windows are displayed in the order of "display sequence" numbers based on the contents of the manager table. Then, at step 928, a close button is displayed only on the window at the foreground and display of a close button of the window behind the foreground window is deactivated and the procedure is then terminated.

Although the procedures according to the second embodiment have been described with reference to FIGS. 9(a) to 9(c), the procedures may also be applied to the first embodiment and the modification of FIG. 7. In the first embodiment, windows may be rearranged as described above with reference to FIGS. 2 and 3. In the modification of FIG. 7, windows may be rearranged such that title bars are sequentially shifted one by one toward the right side of the screen.

Although processes for displaying windows are performed in the order of "display sequence" numbers stored in the manager table in the above embodiments, it is also possible to employ a method in which, instead of repeating the individual window display process, the state of overlapping of windows is estimated based on the contents of the manager table and final screen display data is generated through calculation and the generated final display data is then displayed. In this case, strictly speaking, "display sequence" does not indicate the order of display of windows.

Although the above embodiments have been described with reference to examples in which controls are arranged down side and left side of the touch panel, the same is applied when controls are arranged up side and right side of the touch panel.

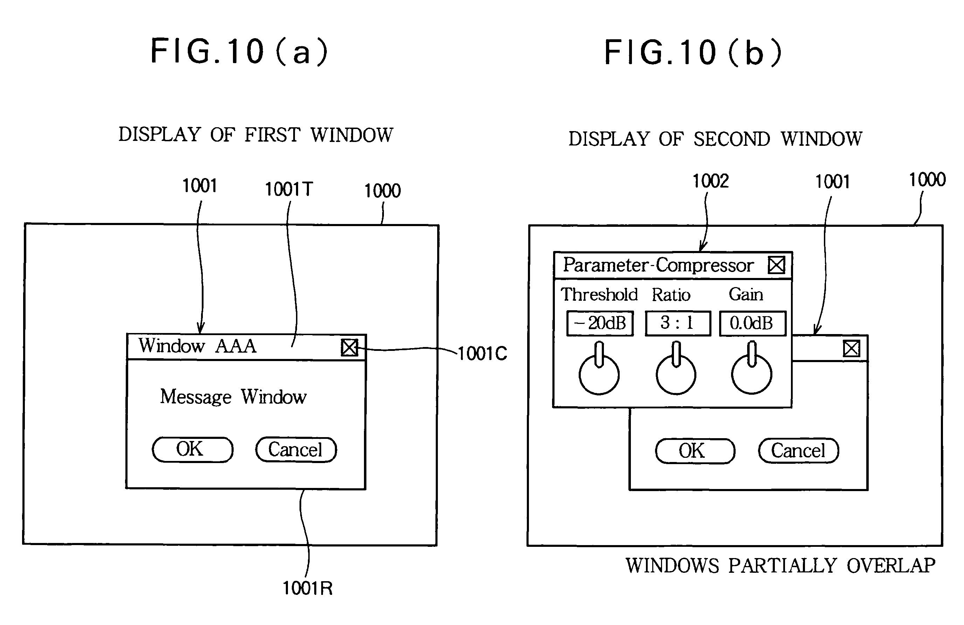

FIGS. 10(a) and 10(b) illustrate examples of display of windows on a digital mixer of related art. Specifically, FIG. 10(a) illustrates a state in which a first window 1001 is displayed on a screen 1000 of a touch panel. The window 1001 includes a title bar 1001T and a contents display region 1001R located below the title bar 1000T. A close button 1000C is displayed at a right end of the title bar 1001T.

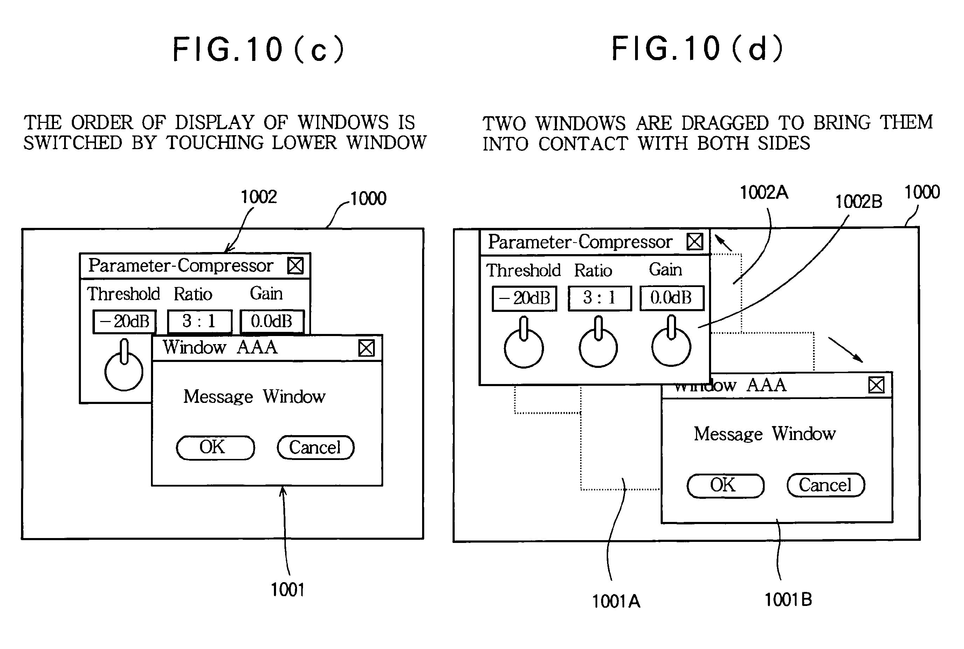

FIG. 10(b) illustrates a state in which a second window 1002 is displayed in the state of FIG. 10(a). When the user desires to bring the rear window 1001 to the foreground in the state of FIG. 10(b), the user may touch a portion of the window 1001 viewed on the screen to switch the order of display of the windows as shown in FIG. 10(c). By dragging the title bar of each of the windows 1001 and 1002, the user can move the windows 1001 and 1002 from positions 1001A and 1002A to 1001B and 1002B, respectively, as shown in FIG. 10(d). The user can operate a plurality of windows while simultaneously viewing contents of the windows. A close button is displayed on each of the windows 1001 and 1002.

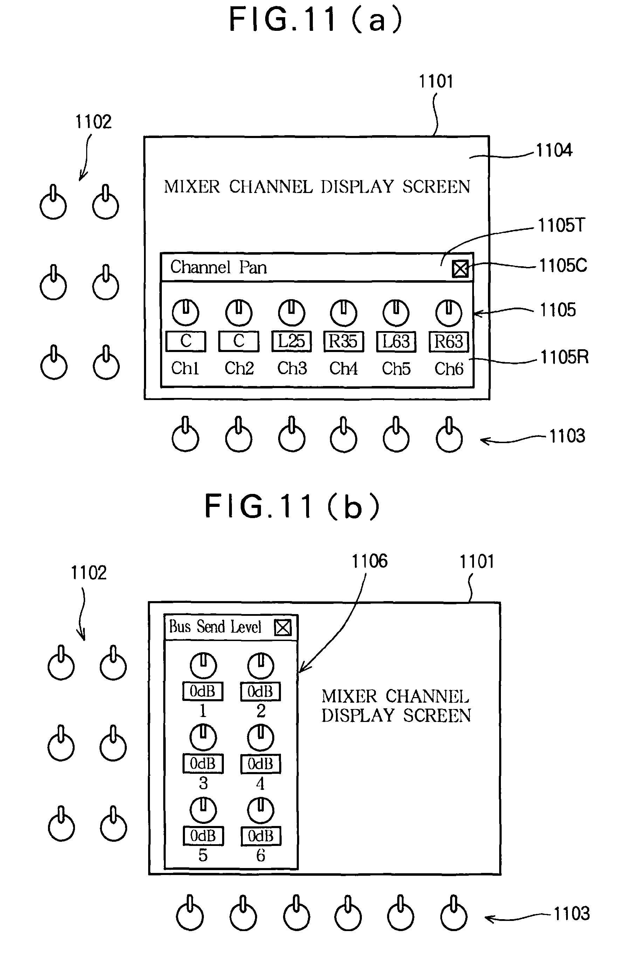

FIGS. 11(a) and 11(b) illustrate examples of display of windows on a digital mixer of related art. Specifically, FIGS. 11(a) and 11(b) illustrate examples in which a plurality of controls are mounted near a touch panel and image elements corresponding to the controls are displayed on a popup window. In FIGS. 11(a) and 11(b), six knobs 1102 are mounted as hardware elements on the touch panel to the left side of a screen 1101 of the touch panel and six knobs 1103 are also mounted below the screen 1101. As shown in FIG. 11(a), image elements corresponding respectively to the six knobs 1103 below the screen are displayed in a contents display region 1005R of a window 1105 that is displayed as a popup window. This allows the user to easily identify the types or current values of parameters that can be adjusted using the six knobs 1103. The same is true for FIG. 11(b).

## Claims

1. A method for controlling windows of a mixer device including a processing unit, an operating panel, and a touch panel provided on the operating panel, the touch panel functioning as both a display part for displaying windows and an input part for inputting instructions, the method being performed by the processing unit and comprising:
a determining step of determining whether or not any window has already been displayed on the touch panel when an instruction to display a new window is made;
a first displaying step of displaying the new window when no window has already been displayed, and otherwise displaying, when a window has already been displayed, the new window at foreground while displaying at least a title bar of a window that has already been displayed; and
a second displaying step of displaying a close button only on a foreground window among windows displayed on the touch panel and deactivating display of a close button for each window behind the foreground window.

2. The method according to claim 1, further comprising:
a detecting step of detecting that a user has touched a window other than a foreground window at an exposed portion of the window viewed on a screen of the touch panel, in case that a plurality of windows have been displayed on the touch panel; and
a switching step of switching between a display position of the window touched by the user and the foreground window, thereby displaying the window touched by the user at foreground.

3. The method according to claim 1 or 2, further comprising:
a detecting step of detecting that a user has touched the close button displayed only at the foreground window or a user has touched a marginal area on the touch panel where no window is displayed; and
a closing step of closing the foreground window when touching of the close button or touching of the marginal area has been detected.

4. A mixer device including an operating panel, a touch panel provided on the operating panel to function as both a display part and an input part, and a plurality of controls arranged on the operating panel near the touch panel, the mixer device comprising:
a storage part that stores a window manager table that registers display sequence data indicating layers for managing an overlapping manner of windows displayed on the touch panel and display position data for managing a display position of each window displayed on the touch panel;
a rearrangement part that determines, when an instruction to display a new window containing image elements placed in an arrangement corresponding to an arrangement of the plurality of controls has been made, whether or not a window containing image elements placed in an arrangement corresponding to the arrangement of the plurality of controls has already been displayed on the touch panel, wherein
(1) when no window has already been displayed,
the rearrangement part calculates display position data that allows the new window to be arranged near a side of the touch panel to which the plurality of controls are arranged and that allows a title bar of the new window to be arranged opposite the side of the touch panel and registers the calculated display position data and display sequence data indicating a foreground layer as an entry of the new window in the window manager table, and
(2) when at least one window containing the image elements has already been displayed,
(2-1) the rearrangement part calculates display position data that allows the new window to be arranged near a side of the touch panel to which the plurality of controls are arranged and that allows a title bar of the new window to be arranged opposite the side of the touch panel and registers the calculated display position data and display sequence data indicating a foreground layer as an entry of the new window in the window manager table, and
(2-2) the rearrangement part calculates, for an entry in the window manager table corresponding to the at least one window that has already been displayed, display position data that allows the already displayed window to be arranged such that only a title bar of the already displayed window is displayed to a side of a title bar of the new window, the side thereof being opposite to the side of the touch panel to which the plurality of controls are arranged, overwrites display position data of the entry of the already displayed window with the calculated display position data, and overwrites display sequence data of the entry with display sequence data allowing the already displayed window to be located in a layer that is immediately behind a layer in which the already displayed window has been located;
a display control part that displays each window on the touch panel using the display position data and display sequence data that are registered in the window manager table by the rearrangement part; and
a close button control part that displays a close button only on a foreground window among displayed windows and deactivates display of a close button for each window behind the foreground window.

5. The mixer device according to claim 4, further comprising:
a detection part for detecting that a user has touched a window other than a foreground window at an exposed portion of the window viewed on a screen of the touch panel incase that a plurality of windows have been displayed on the touch panel; and
a switching part that switches between display position data and display sequence data of the window touched by the user and display position data and display sequence data of the foreground window, thereby displaying the window touched by the user at the foreground.

6. The mixer device according to claim 4 or 5, further comprising:
a detecting part for detecting that a user has touched the close button displayed only at the foreground window or user has touched a marginal area on the touch panel where no window is displayed; and
a closing part that closes the foreground window when touching of the close button or touching of the marginal area has been detected.

7. The mixer device according to any one of claims 4 to 6, wherein the controls are arranged near to an up side, down side, right side or left side of the touch panel.

8. A machine readable medium containing a window control program for use in a mixer device including an operating panel, a touch panel provided on the operating panel to function as both a display part and an input part, and a plurality of controls provided on the operating panel near the touch panel, the window control program being executable by the mixer device to perform a method comprising:
a storing step of storing a window manager table that registers display sequence data indicating layers for managing an overlapping manner of windows displayed on the touch panel and display position data for managing a display position of each window displayed on the touch panel;
a rearrangement step of determining, when an instruction to display a new window containing image elements placed in an arrangement corresponding to an arrangement of the plurality of controls has been made, whether or not a window containing image elements placed in an arrangement corresponding to the arrangement of the plurality of controls has already been displayed on the touch panel, wherein
(1) when no window has already been displayed,
the rearrangement step calculates display position data that allows the new window to be arranged near a side of the touch panel to which the plurality of controls are arranged and that allows a title bar of the new window to be arranged opposite the side of the touch panel and registers the calculated display position data and display sequence data indicating a foreground layer as an entry of the new window in the window manager table, and
(2) when at least one window containing the image elements has already been displayed,
(2-1) the rearrangement step calculates display position data that allows the new window to be arranged near a side of the touch panel to which the plurality of controls are arranged and that allows a title bar of the new window to be arranged opposite the side of the touch panel and registers the calculated display position data and display sequence data indicating a foreground layer as an entry of the new window in the window manager table, and
(2-2) the rearrangement step calculates, for an entry in the window manager table corresponding to the at least one window that has already been displayed, display position data that allows the already displayed window to be arranged such that only a title bar of the already displayed window is displayed to a side of a title bar of the new window, the side thereof being opposite to the side of the touch panel to which the plurality of controls are arranged, overwrites display position data of the entry of the already displayed window with the calculated display position data, and overwrites display sequence data of the entry with display sequence data allowing the already displayed window to be located in a layer that is immediately behind a layer in which the already displayed window has been located;
a display control step of displaying each window on the touch panel using the display position data and display sequence data that are registered in the window manager table; and
a close button control step of displaying a close button only on a foreground window among displayed windows and deactivates display of a close button for each window behind the foreground window.

9. The machine readable medium containing a window control program according to claim 8, wherein the method further comprising:
a detection step of detecting that a user has touched a window other than a foreground window at an exposed portion of the window viewed on a screen of the touch panel incase that a plurality of windows have been displayed on the touch panel; and
a switching step of switching between display position data and display sequence data of the window touched by the user and display position data and display sequence data of the foreground window, thereby displaying the window touched by the user at the foreground.

10. The machine readable medium containing a window control program according to claim 8 or 9, wherein the method further comprising:
a detecting step of detecting that a user has touched the close button displayed only at the foreground window or user has touched a marginal area on the touch panel where no window is displayed; and
a closing step of closing the foreground window when touching of the close button or touching of the marginal area has been detected.
